# EUROPEAN PATENT APPLICATION

(11) **EP 2 733 168 A1**
(43) Date of publication of application: **21.05.2014**
(21) Application number: 13192633.9
(22) Date of filing: 13.11.2013
(51) Int. Cl.: C08L 7/00, C08K 3/04, C08K 3/36, C08K 5/10, C08K 5/103

(54) **Tire composition and tire with component comprising polyisoprene rubber and vegetable oil**

(30) Priority: 15.11.2012 US 201213677565
(71) Applicant: The Goodyear Tire & Rubber Company, Akron, Ohio 44316 (US)
(72) Inventor: Sandstrom, Paul Harry, Cuyahoga Falls, OH Ohio 44223 (US); Rodewald, Stephan, Canal Fulton, OH Ohio 44614 (US); Ramanathan, Ahalya, Stow, OH Ohio 44224 (US)
(74) Representative: Kutsch, Bernd

(57) **Abstract**

A rubber composition and a tire comprising such a rubber composition are disclosed. The rubber composition comprises, based on parts by weight per 100 parts by weight of elastomer (phr):
(A) cis 1,4-polyisoprene rubber;
(B) from 1 to 10 phr of at least one triglyceride vegetable oil;
(C) from 30 to 60 phr of a reinforcing filler comprising
(1) carbon black,
(2) silica, or
(3) combination of carbon black and silica; and

(D) a silica coupling agent for the silica, where the reinforcing filler contains silica, having a moiety reactive with hydroxyl groups on the silica and another different moiety interactive with carbon-to-carbon double bonds of the rubber. The rubber composition is free of oil extended elastomer and/or the rubber composition is exclusive of added petroleum based rubber processing oil.

## Description

### Field of the Invention

This invention relates to a rubber composition comprising a combination of cis 1,4-polyisoprene rubber, desirably natural rubber, and a low level of vegetable oil such as soybean oil. Such rubber composition is intended for use as a tread in tires designed for relatively heavy loads such as, for example, truck tires.

### Background of the Invention

Pneumatic rubber tires are sometimes intended to be used for purposes where a tread component of the tire is desirably used where significant and sometimes critical performance properties are related to tire (tread) rolling resistance, tread wear resistance and tread resistance to tear, particularly for truck tire treads intended for carrying heavy loads.

For this invention, it is desired to evaluate rubber compositions containing a combination of natural (cis 1,4-polyisoprene) rubber and soybean oil for such purpose.

It is recognized that soybean oil has heretofore been suggested for use in various rubber compositions and tire components composed of soybean oil containing rubber compositions.

For example, see US-B-6.448,318, US-B-7,919,553, US-B-8,100,157, US-B-8,022,136 and US-B-8,044,118.

However, it has been a challenge to use any level of petroleum based rubber processing oil in cis 1,4-polyisoprene rubber, particularly natural rubber, based tire treads that are used for large tires, particularly truck tires. Any attempt to improve the processing behavior of natural rubber based tread compounds by addition of petroleum based rubber processing oil has shown a loss in tear and abrasion resistance or treadwear performance when used in truck tires. It was considered a challenge to use a petroleum based rubber processing oil at low levels in natural rubber based tire treads to provide improved processing of the uncured rubber composition as a result of reduced uncured rubber viscosity without giving up treadwear and tear performance of cured rubber tires. It was decided to explore the use of low levels of soybean oil as replacements for petroleum based rubber processing oils in such natural rubber based tread compounds for use in truck tires.

For such evaluation, it is important to appreciate that various vegetable oils, including soybean oil, differ significantly from petroleum based oils, particularly where such vegetable oils are triglycerides which contain a significant degree of unsaturation and clearly not a linear or an aromatic petroleum based oil.

The triglyceride(s) for vegetable oils such as, for example, soybean oil, sunflower oil and canola oil are in a form of esters containing a degree of unsaturation. Therefore, blending low levels of such triglyceride(s), particularly soybean oil with natural rubber is considered herein to be a significant departure from the use of petroleum based processing oils.

For informational purposes to illustrate the relative saturated, mono unsaturated and polyunsaturated contents of various vegetable oils, the following Table A is provided.

**Table A**

| Vegetable Oil | Percent Saturated | Percent Mono Unsaturated | Percent Poly Unsaturated |
|---|---|---|---|
| Soybean | 16 | 23 | 58 |
| Sunflower | 10 | 45 | 40 |
| Canola (Rapeseed) | 7 | 63 | 28 |
| Corn | 13 | 28 | 55 |
| Coconut | 87 | 6 | 2 |
| Cottonseed | 26 | 18 | 52 |
| Olive | 14 | 73 | 11 |
| Palm | 49 | 37 | 9 |
| Peanut | 17 | 46 | 32 |
| Safflower | 10 | 45 | 40 |

Therefore, such vegetable oils, such as for example, soybean oil, contain a significant unsaturation content not experienced with petroleum based rubber processing oils.

The challenge of combining low levels of such vegetable oil (particularly soybean oil) exclusive of petroleum based oils, with natural rubber is considered to be a significant endeavor with results being unknown until the evaluation is undertaken.

In the description of this invention, the terms "compounded" rubber compositions and "compounds"; where used refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

### Summary and Practice of the Invention

The invention relates to a rubber composition in accordance with claim 1 and to a tire in accordance with claim 13.

Dependant claims refer to preferred embodiments of the invention.

In accordance with a preferred aspect of this invention, a rubber composition is provided comprising, based on parts by weight per 100 parts by weight of elastomer, particularly cis 1,4-polyisoprene rubber, (phr):
(A) cis 1,4-polyisoprene rubber (comprising at least one of natural and synthetic, desirably at least 50 percent and more desirably 100 percent, natural cis 1,4-polyisoprene rubber),
(B) from 1 to 10, alternately from 2 to 6, phr of at least one triglyceride vegetable oil (namely soybean oil and exclusive of petroleum based oil),
(C) from 30 to 60 phr of reinforcing filler comprising:
   (1) rubber reinforcing carbon black
   (2) silica such as precipitated silica, or
   (3) combination of rubber reinforcing carbon black and silica such as precipitated silica (containing, for example, 20 to 90 weight percent of silica, alternately from 55 to 90 weight percent silica for silica-rich reinforcing filler and alternately from 20 to 45 weight percent silica for a carbon black-rich reinforcing filler), and
(D) silica coupling agent (for said silica where said reinforcing filler contains silica) having a moiety reactive with hydroxyl groups (e.g. silanol groups) on said silica and another different moiety interactive with carbon-to-carbon double bonds of said rubber;
wherein said rubber composition is free of oil extended elastomer (free of elastomer having been blended with oil, i.e. either of vegetable oil, such as soybean oil, and petroleum based oil, during the manufacture of the elastomer).

Such precipitated silicas are well known as being synthetic, amorphous silicas containing hydroxyl groups on their surfaces, which may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such precipitated silicas may, for example, also be characterized by having a dibutylphthalate (DBP) absorption value, for example, in a range of 100 to 400, and more usually 150 to 300 cc/100g.

Various commercially available precipitated silicas may be used, such as, only for example silicas from PPG Industries under the Hi-Sil trademark with designations 210 and 243; silicas from Rhodia, with, for example, designations of Z1165MP and Z165GR; silicas from Evonic with, for example, designations VN2 and VN3; and chemically treated precipitated silicas such as for example Agilon™ 400 from PPG.

Representative examples of rubber reinforcing carbon blacks are, for example, those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

Other fillers may be used in the vulcanizable rubber composition including, at least one additional particulate filler comprising ultra high molecular weight polyethylene (UHMWPE); particulate polymer gels such as those disclosed in US-B-6,242,534; US-B-6,207,757; US-B-6,133,364; US-B-6,372,857; US-A-5,395,891; or US-B-6,127,488, and plasticized starch composite filler such as that disclosed in US-A-5,672,639. One or more other fillers may be used in an amount ranging from 1 to 20 phr.

It may be desired for the precipitated silica-containing rubber composition to contain a silica coupling agent for the silica comprising, for example,
(A) bis(3-trialkoxysilylalkyl) polysulfide containing an average in range of from 2 to 4 sulfur atoms in its connecting bridge, or
(B) an organoalkoxymercaptosilane, or
(C) combination of said bis(3-trialkoxysilylalkyl) polysulfide and organoalkoxymercaptosilane.

Representative of such bis(3-trialkoxysilylalkyl) polysulfide comprising bis(3-triethoxysilylpropyl) polysulfide.

It is readily understood by those having skill in the art that the vulcanizable rubber composition would be compounded by methods generally known in the rubber compounding art, and contain commonly used additive materials such as, for example, sulfur and sulfur donor curatives, sulfur vulcanization curing aids, such as activators and retarders, resins including tackifying resins in addition to said triglyceride processing oil, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of tackifier resins, if used, may comprise, for example, 0.5 to 10 phr, usually 1 to 5 phr. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, 1 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The vulcanizable natural rubber composition containing a low level of the triglyceride processing oil is used in a tread compound in tires carry heavy loads. The pneumatic tire of the present invention may be an aircraft tire, agricultural, earthmover, off-the-road or truck tire. Usually and desirably the tire is a truck tire intended for heavy duty use. The tire may also be a radial or bias ply tire, with a radial ply tire being usually preferred.

Vulcanization of the pneumatic tire of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam or hot air.

The following examples are presented for the purposes of illustrating the present invention. All parts and percentages are parts by weight, usually parts by weight per 100 parts by weight rubber (phr) unless otherwise indicated.

### EXAMPLE I

In this example, the effect of providing a rubber composition containing a combination of triglyceride oil, namely soybean oil, and natural rubber is evaluated, wherein the soybean oil is freely added to rubber composition in an internal rubber mixer and the rubber composition is free of any of petroleum based oil and triglyceride oil, particularly soybean oil, extended elastomer.

Rubber compositions identified herein as Control rubber Sample A and Experimental rubber Sample B are prepared and evaluated.

The rubber Samples were prepared by mixing natural rubber with reinforcing filler as rubber reinforcing carbon black without precipitated silica together in a first non-productive mixing stage (NP1) in an internal rubber mixer for about 4 minutes to a temperature of 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual nonproductive mixing stage and before the final productive mixing stage.

The basic formulation for the Control rubber Sample A and Experimental rubber Sample B is presented in the following Table 1 expressed in parts by weight per 100 parts of rubber (phr) unless otherwise indicated.

**Table 1**

| Non-Productive Mixin Stage (NP) | Parts by weight (phr) |
|---|---|
| Natural rubber rubber¹ | 100 |
| Soybean oil² | 0 or 5 |
| Carbon black³ | 50 |
| Fatty acid⁴ | 1 |
| Zinc oxide | 3 |
| Processing oil, petroleum derived (naphthenic)⁵ | 0 or 5 |
| | |

| Productive Mixing Stage (P) | |
|---|---|
| Sulfur | 1.7 |
| Sulfur cure accelerator(s)⁶ | 2.1 |
| Antioxidant | 1 |

| | |
|---|---|
| ¹Natural rubber, TSR20 ²Soybean oil as Sterling oil from the Stratas Foods Company ³N550 rubber reinforcing carbon black, ASTM identification ⁴Primarily comprised of stearic, palmitic and oleic acids ⁵Petroleum based processing oil as Naprex 38 from ExxonMobil Company ⁶Sulfenamide and diphenylguanidine accelerators | |

The following Table 2 illustrates cure behavior and various physical properties of rubber compositions based upon the basic recipe of Table 1 and reported herein as a Control rubber Sample A and Experimental rubber Samples B. Where cured rubber samples are examined, such as for the stress-strain, hot rebound and hardness values, the rubber samples were cured for 30 minutes at a temperature of 150°C.

**Table 2**

| | Parts (phr) | |
|---|---|---|
| Materials | Control Sample A | Experimental Sample B |
| Natural rubber | 100 | 100 |
| Soybean oil (freely added) | 0 | 5 |
| Petroleum processing oil | 5 | 0 |
| | | |

| Uncured and Cured Properties RPA (100°C). Storaqe Modulus G'. MPa | | |
|---|---|---|
| Uncured (G') modulus, 15% strain, 0.83 Hertz (kPa) | 261 | 270 |
| Cured G' modulus, 10% strain, 11 Hertz (kPa) | 1459 | 1437 |
| Tan delta at 10% strain, (kPa) | 0.097 | 0.102 |
| | | |

| Rheometer (150°C) | | |
|---|---|---|
| T90 (minutes) | 10.8 | 11.1 |
| Delta torque (dNm) | 14.7 | 14.7 |
| | | |

| Stress-strain. ATS. 30 min. 150°C | | |
|---|---|---|
| Tensile strength (MPa) | 24.6 | 24.9 |
| Elongation at break (%) | 455 | 479 |
| 300 % modulus, ring (MPa) | 16.1 | 15 |
| | | |

| Rebound. | | |
|---|---|---|
| 23ºC | 54 | 54 |
| 100°C | 68 | 67 |
| | | |
| Tear strength,¹ 95º (N)_{_}Higher is better | 142 | 168 |
| Abrasion rate (mg/km), (Grosch)² medium severity (40N), lower is better | 146 | 130 |

| | | |
|---|---|---|
| ¹Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. ²Grosch abrasion rate (Medium Severity Test) determination by a LAT-1 00 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A medium severity test was conducted at a load of 40 Newtons, a slip angle of 6 degrees and a disk speed of 20 km/hr and a sample travel distance of 1,000 meters. | | |

From Table 2 it can be seen that the RPA, rheometer cure, stress-strain properties as well as rebound properties are fairly similar for both Control rubber Sample A, containing petroleum based rubber processing oil, and Experimental rubber Sample B, which contains soybean oil. However, Experimental rubber Sample B, which contains soybean oil, exhibits superior lab results for both tear strength and abrasion resistance. These results are predictive of a rubber tire tread that would beneficially provide both improved abrasion and tear resistance.

Such results of this evaluation is considered as being significant in a sense of providing a truck tire intended for heavy loads with a tread having both improved (reduced) treadwear to promote longer tread life and improved (increased) tear resistance which is important for chip/chunk resistance.

### EXAMPLE II

In this example, an additional evaluation of soybean oil as a replacement for petroleum based processing oil in a natural rubber based rubber composition is undertaken.

Rubber compositions identified herein as Control rubber Sample C and Experimental rubber Samples D, E, F and G were prepared and evaluated.

The rubber Samples were prepared by mixing natural rubber with reinforcing filler as rubber reinforcing carbon black in a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for about 2 minutes to a temperature of 115°C. The rubber composition is removed from its internal mixer after each mixing step and cooled to below 40°C between each individual nonproductive mixing stage and before the final productive mixing stage.

The basic formulation for the Control rubber Sample C and Experimental rubber Samples is presented in the following Table 3 expressed in parts by weight per 100 parts of rubber (phr) unless otherwise indicated.

**Table 3**

| Non-Productive Mixing Stage (NP) | Parts by weight (phr) |
|---|---|
| Natural rubber | 100 |
| Soybean oil | 0, 2.5 and 5 |
| Carbon black | 50 |
| Fatty acid | 1 |
| Zinc oxide | 3 |
| Rubber processing oil (naphthenic) | 0, 2.5 and 5 |
| | |

| Productive Mixing Stage (P) | |
|---|---|
| Sulfur | 1.7 |
| Sulfur cure accelerator(s) | 2.1 |
| Antioxidant | 1 |

Materials used are identified in Example I.

The following Table 4 illustrates cure behavior and various physical properties of rubber compositions based upon the basic recipe of Table 3 and reported herein as a Control rubber Sample C and Experimental rubber Samples D through G. Where cured rubber samples are examined, such as for the stress-strain, hot rebound and hardness values, the rubber samples were cured for 30 minutes at a temperature of about 150°C. Control rubber Sample C represents a natural rubber composition containing carbon black as the reinforcing filler without the addition of processing oil. It is desired to reduce the uncured rubber compound viscosity (uncured G' from the RPA) by adding a processing oil to the rubber composition to improve extrusion of the rubber composition in the process of forming a tread prior to the curing step. Experimental rubber Samples D and E represent what is considered to be a standard practice of adding a small amount of, for example, 2.5 or 5 phr, of petroleum based rubber processing oil, respectively, to the natural rubber based composition to improve downstream uncured rubber extrusion behavior (faster extrusion and smoother extrudates). In contrast, Experimental rubber samples F and G represent the addition of 2.5 and 5 phr, respectively of soybean oil, instead of petroleum based rubber processing oil, to reduce compound viscosity and improve the subsequent extrusion process.

**Table 4**

| | (Parts (phr) | | | | |
|---|---|---|---|---|---|
| | Control | | Experimental | | |
| Rubber Samples | C | D | E | F | G |
| Natural rubber | 100 | 100 | 100 | 100 | 100 |
| Rubber processing oil (naphthenic) | 0 | 2.5 | 5 | 0 | 0 |
| Soybean oil | 0 | 0 | 0 | 2.5 | 5 |
| | | | | | |

| RPA (100ºC) Storage Modulus. G', MPa | | | | | |
|---|---|---|---|---|---|
| Uncured G', 15% strain, 0.83 Hertz | 267 | 267 | 239 | 265 | 228 |
| Cured G' modulus, 10% strain, 11 Hertz | 1828 | 1719 | 1553 | 1667 | 1487 |
| Tan delta at 10% strain | 0.107 | 0.105 | 0.102 | 0.109 | 0.102 |
| | | | | | |

| Rheometer (150°C) | | | | | |
|---|---|---|---|---|---|
| T90 minutes) | 11.2 | 11.3 | 11.3 | 10.9 | 11.1 |
| Delta torque (dNm) | 19.6 | 18.2 | 16.8 | 17.9 | 16.2 |
| | | | | | |

| Stress-Strain. ATS. 30 min. 150°C | | | | | |
|---|---|---|---|---|---|
| Tensile strength (MPa) | 23.5 | 24.5 | 23.6 | 23.9 | 23.7 |
| Elongation at break (%) | 391 | 427 | 439 | 442 | 449 |
| 300% Modulus, ring (MPa) | 19.4 | 18 | 16.5 | 16.8 | 15.7 |
| | | | | | |

| Rebound | | | | | |
|---|---|---|---|---|---|
| 23°C | 50 | 52 | 52 | 50 | 52 |
| 100°C | 66 | 67 | 67 | 65 | 66 |
| | | | | | |

| Tear Strength (Same test as Table 2) | | | | | |
|---|---|---|---|---|---|
| (95°C), N - Higher is better | 105 | 93 | 89 | 108 | 111 |
| | | | | | |
| Abrasion rate, mg/km, (Grosch) med severity (Same test as Table 2) - Lower is better | 129 | 136 | 138 | 125 | 118 |

From Table 4 it can be seen that the addition of 2.5 phr of petroleum based processing oil (Experimental rubber Sample D) or 2.5 phr of soybean oil (Experimental rubber Sample F) has no impact on the uncured G' value from the RPA test. However, Experimental rubber Samples E and G, which contain 5 phr of petroleum based processing oil or 5 phr of soybean oil, respectively, show a significant reduction in uncured viscosity as measured by the RPA test (uncured G'). The results shown in Table 4 indicate the RPA, rheometer, stress-strain and rebound values are similar for all of the Experimental rubber Samples when compared at equal phr of processing oil addition, whether petroleum based processing oil or soybean oil.

However it can also be seen from Table 4 that the results further clearly show the benefit of the soybean oil as compared to petroleum based processing oil at the 2.5 and 5 phr levels when comparing tear resistance (higher is better) and abrasion resistance (lower is better) values.

This is considered as being significant in a sense of being able to reduce uncured natural rubber based compound viscosity for improved extrusion performance of the uncured rubber composition and also to maintain cured natural rubber based composition's improved physical properties to promote improved (lower is better) treadwear and chip/chunk resistance for truck tire treads intended to be useful for carrying heavy loads.

## Claims

1. A rubber composition comprising, based on parts by weight per 100 parts by weight of elastomer (phr):
(A) cis 1,4-polyisoprene rubber;
(B) from 1 to 10 phr of at least one triglyceride vegetable oil;
(C) from 30 to 60 phr of a reinforcing filler comprising
(1) carbon black,
(2) silica, or
(3) combination of carbon black and silica; and
(D) a silica coupling agent for the silica, where the reinforcing filler contains silica, having a moiety reactive with hydroxyl groups on the silica and another different moiety interactive with carbon-to-carbon double bonds of the rubber;
wherein the rubber composition is free of oil extended elastomer and/or wherein the rubber composition is exclusive of added petroleum based rubber processing oil.

2. The rubber composition of claim 1 wherein the rubber comprises at least one of natural and synthetic cis 1,4-polyisoprene rubber.

3. The rubber composition of claim 1 wherein the rubber is natural cis 1,4-polyisoprene rubber.

4. The rubber composition of at least one of the previous claims wherein the reinforcing filler is a rubber reinforcing carbon black.

5. The rubber composition of at least one of the previous claims wherein the reinforcing filler is precipitated silica.

6. The rubber composition of at least one of the previous claims wherein the reinforcing filler is a combination of carbon black and silica, preferably precipitated silica, containing from 20 to 90 weight percent of silica.

7. The rubber composition of at least one of the previous claims wherein the reinforcing filler is a combination of carbon black and silica, preferably precipitated silica, containing from 55 to 90 weight percent of silica.

8. The rubber composition of at least one of the previous claims wherein the reinforcing filler is a combination of carbon black and silica, preferably precipitated silica, containing from 20 to 45 weight percent of silica.

9. The rubber composition of at least one of the previous claims further comprising from 1 to 20 phr of at least one additional particulate filler selected from at least one of ultra high molecular weight polyethylene (UHMWPE), a particulate polymer gel and plasticized starch.

10. The rubber composition of at least one of the previous claims wherein the triglyceride vegetable oil is soybean oil.

11. The rubber composition of at least one of the previous claims wherein the rubber composition comprises 2 to 6 phr of the triglyceride vegetable oil or of the soybean oil.

12. The rubber composition of at least one of the previous claims wherein the silica coupling agent comprises:
(A) bis(3-trialkoxysilylalkyl) polysulfide containing an average in range of from 2 to 4 sulfur atoms in its connecting bridge, or
(B) an organoalkoxymercaptosilane, or
(C) combination of the bis(3-trialkoxysilylalkyl) polysulfide and the organoalkoxymercaptosilane.

13. The rubber composition of claim 12 wherein the bis(3-trialkoxysilylalkyl) polysulfide comprises bis(3-triethoxysilylpropyl) polysulfide.

14. A tire having a component comprising the rubber composition of at least one of the previous claims.

15. The tire of claim 14 wherein the component is a tread or wherein the tire comprises a tread comprising a tread cap layer and a tread base layer and wherein the component is the tread cap layer.
